# EUROPEAN PATENT APPLICATION

(11) **EP 4 832 293 A1**
(43) Date of publication of application: **28.10.2026**
(21) Application number: 26173669.8
(22) Date of filing: 21.04.2026
(51) Int. Cl.: H02J 3/38, H02J 3/0012, H02J 3/28, H02J 13/12, H02J 101/24

(54) **POWER SUPPLY SYSTEM AND POWER CONVERTER**

(30) Priority: 21.04.2025 CN 202510503326
(71) Applicant: HUAWEI TECHNOLOGIES CO., LTD., Shenzhen, Guangdong 518129 (CN)
(72) Inventor: YU, Xinyu, Shenzhen, 518129 (CN); XIN, Kai, Shenzhen, 518129 (CN); WAN, Song, Shenzhen, 518129 (CN)
(74) Representative: Gill Jennings & Every LLP

(57) **Abstract**

This application provides a power supply system and a power converter, applied to a photovoltaic power station and energy storage station integrated system. The power supply system includes a station controller and a plurality of subarrays, and each subarray includes a plurality of power converters and one subarray data collection unit. The power converter is configured to: convert a direct current from a photovoltaic module or an energy storage apparatus into an alternating current and input the alternating current to a power grid. The power converter is further configured to upload, through a communication interface, recording data generated when a fault occurs in the power grid to a subarray data collection unit, and the recording data includes information about a voltage and an output current that are output by the power converter. The subarray data collection unit is configured to: collect and upload the recording data that is generated when the fault occurs in the power grid and that is uploaded by a plurality of power converters in a subarray in which the subarray data collection unit is located. The station controller is configured to: collect and store the recording data that is generated when the fault occurs in the power grid and that is uploaded by a plurality of subarray data collection units. According to this solution, time for collecting a fault recording file can be shortened, and a capability and efficiency of analyzing and reporting a power grid fault can be improved.

## Description

### TECHNICAL FIELD

This application relates to the field of power technologies, and more specifically, to a power supply system and a power converter.

### BACKGROUND

Automatic fault recording of a power system has become an important basis for analyzing system accidents, especially analyzing relay protection action behavior. In particular, fault recording is a power grid fault diagnosis system based on fault recording information. When a fault occurs in a power grid, the fault recording can automatically and accurately record a change of electrical quantities before and after the fault occurs. By analyzing and comparing the electrical quantities, the fault recording can accurately locate various fault points and quickly rectify the fault, thereby effectively improving a safe operation level of the power system. However, currently, when a fault occurs in a power grid, a fault recording apparatus generates a recording file and stores the recording file in a power converter. Operation and maintenance personnel need to go to sites in which devices are located, separately obtain fault recording files by using a digital collection device, and summarize all fault recording data after logs are exported during inspection. Then, professional technical personnel manually analyze the data to locate a fault point and a cause. In this way, maintenance personnel can repair the fault point to rectify the fault. As a coverage area of the power system is increasingly large and a quantity of devices increases, it takes a large amount of time to collect the fault recording data of the devices for fault analysis and fault rectifying. As a result, it takes a long time to restore power supply, and a large amount of manpower and material resources are wasted. Therefore, how to improve efficiency of fault recording analysis is a problem to be resolved.

### SUMMARY

This application provides a power supply system and a power converter. The power converter detects a fault, records recording data, and uploads the recording data in real time. The fault recording data is reported level by level, to implement overall fault recording analysis at a power station level. This shortens time for exporting a log through manual inspection and professional technical personnel to analyze a power grid event, facilitates quick locating of a cause of the power grid event, and improves a capability and efficiency of analyzing and reporting a power grid fault.

According to a first aspect, this application provides a power supply system. The power supply system includes a station controller and a plurality of subarrays, and each subarray includes a plurality of power converters and one subarray data collection unit. The power converter is configured to: convert a direct current from a photovoltaic module or an energy storage apparatus into an alternating current and input the alternating current to a power grid. The power converter includes an output end and a communication interface. The power converter is further configured to upload, through the communication interface, recording data generated when a fault occurs in the power grid to a subarray data collection unit of a subarray in which the power converter is located, and the recording data includes information about a voltage and an output current that are output by the output end of the power converter. The subarray data collection unit is configured to: collect and upload the recording data that is generated when the fault occurs in the power grid and that is uploaded by a plurality of power converters in a subarray in which the subarray data collection unit is located. The station controller is configured to: collect and store the recording data that is generated when the fault occurs in the power grid and that is uploaded by a plurality of subarray data collection units.

The power converter includes a photovoltaic inverter and a power conversion system, which are respectively configured to: convert the direct current transmitted by the photovoltaic module and the direct current transmitted by the energy storage apparatus into alternating currents, and transmit the alternating currents to the power grid. It should be noted that the power supply system provided in this application may be a pure photovoltaic system, that is, the power converter includes only the photovoltaic inverter, or may be a pure energy storage system, that is, the power converter includes only the power conversion system, or may be a photovoltaic energy storage system, that is, the power converter includes the power conversion system and the photovoltaic inverter.

The power converter has a fault detection function and a fault recording function. When the power converter detects that a fault occurs in the power grid, for example, low voltage ride-through, high voltage ride-through, or the like, the power converter automatically enters a recording state, to record recording data. The power converter uploads the recording data in a timely manner without occupying local storage space, so that chip resource occupation of the power converter can be reduced.

Alternating current output ends of a plurality of power converters in a same subarray in the power supply system are connected to a same box-type substation. The subarray data collection unit may be located in the box-type substation, and is connected to the communication interface of the power converter to implement communication. The plurality of power converters upload recording data to the subarray data collection unit in real time. After collecting the recording data uploaded by the plurality of power converters in the subarray, the subarray data collection unit uploads the recording data uploaded by the plurality of power converters in the subarray to the station controller. The station controller comprehensively controls and manages the power converters in all the subarrays in the power supply system. The station controller collects and stores the recording data that is generated when the fault occurs in the power grid and that is uploaded by the plurality of subarray data collection units. The station controller obtains recording data recorded by all power converters in the power supply system, to store a station-level fault recording file, so as to directly view and analyze the recording data.

In the conventional technology, when a fault occurs in a power grid, a voltage or a current output by a power converter changes. Although the power converter can record output voltage and output current information of the power converter, it is difficult to compare fault responses of different power converters based on fault recording data recorded by a single power converter because the power converters are disposed in a distributed manner. In this application, the power converter reports fault recording data level by level, the station controller aggregates all fault recording data, and overall fault recording storage and analysis at a power station level are implemented by fully utilizing an architecture of a string power supply system without additionally adding a recording device; and at the station controller, an output voltage and an output current inside each power converter may be obtained, and fault responses of different devices may be compared.

Currently, operation and maintenance personnel may read fault recording files from fault recording devices of power converters one by one by using a digital collection device, summarize all recording files for analysis, and accurately locate a fault point based on fault recording data, to rectify a power grid fault, so as to restore system running as soon as possible. However, as the power supply system and the power grid increase in scale, a probability of causing an accident by a local power grid fault and a probability of impact scope expansion are greatly increased accordingly. In addition, an increasing quantity of devices in the power supply system greatly increases an amount of information generated when a fault occurs in the power grid. This objectively increases time required for the operation and maintenance personnel to collect fault recording data, rectify the fault, and restore power supply. Therefore, in this application, the station controller obtains fault recording data of all the power converters, so that time for exporting a log through manual inspection and professional technical personnel to analyze a power grid event can be effectively shortened. In addition, all the fault recording data is stored in a unified manner, so that local storage space of the power converter can be saved, and manpower and material resources can be saved.

In an implementation, the recording data further includes a first moment at which the power converter starts recording and a second moment at which the power converter ends recording when the fault occurs in the power grid, and when first moments or second moments included in the recording data uploaded by the plurality of power converters in the subarray are different, the subarray data collection unit is configured to unify the first moments and the second moments, to enable the first moments included in the recording data that is of the plurality of power converters and that is uploaded by the subarray data collection unit to the station controller to be the same and the second moments included in the recording data that is of the plurality of power converters and that is uploaded by the subarray data collection unit to the station controller to be the same.

The plurality of power converters record the recording data based on respective system time. The information about the output voltage and the output current in the recording data have corresponding moment information. The recording data further includes the first moment at which the power converter starts recording and the second moment at which the power converter ends recording. After collecting the recording data of the plurality of power converters in the subarray, the subarray data collection unit needs to perform a time synchronization operation. The recording data time synchronization operation is to ensure consistent time of event data recorded by the plurality of power converters. When the plurality of power converters simultaneously record event fault data, ensuring time consistency of the data can help better perform data comparison and analysis, and improve data consistency and comparability.

According to the solution of this application, the time synchronization operation is performed on the recording data of the plurality of power converters, to ensure accuracy and reliability of the recording data. Accurate recording data time synchronization can effectively help analyze a power grid event and diagnose a fault.

In an implementation, the subarray data collection unit is further configured to generate a subarray analysis report, the subarray analysis report represents the recording data uploaded by the plurality of power converters in the subarray in which the subarray data collection unit is located, the subarray analysis report includes a fault type, and the fault type indicates that at least one of a single-phase short circuit, a two-phase short circuit, a three-phase short circuit, a high-voltage operation, a phase-loss operation, or a power grid trip occurs in the power grid.

The subarray data collection unit determines, based on waveforms and features of the fault recording data, that a type of the fault that occurs includes the single-phase short circuit, the two-phase short circuit, the three-phase short circuit, the high-voltage operation, the phase-loss operation, or the power grid trip. The fault type may be obtained through analysis based on a status displayed in the fault recording data and the like. The subarray analysis report may be used to display an analysis result of the recording data in the subarray.

According to the solution of this application, the subarray data collection unit has a capability of automatically generating a power grid fault analysis report. After quickly analyzing the fault recording data, the subarray data collection unit intuitively displays the analysis result in a form of a report. This helps improve a capability of analyzing and reporting a power grid fault to quickly parse a fault type, and helps restore power supply earlier.

In an implementation, the station controller is further configured to generate a station-level analysis report, the station-level analysis report represents the recording data uploaded by the plurality of subarray data collection units, the station-level analysis report includes location information, and the location information indicates whether the fault occurs inside or outside the power supply system.

After collecting the recording data uploaded by the plurality of subarray data collection units, the station controller may automatically generate a station-level analysis report based on the fault recording data uploaded by each subarray. The station controller may determine, based on a difference between fault recording data recorded by different subarrays and by using a preset algorithm or model, whether the fault occurs inside or outside a station.

According to the solution of this application, the station controller has a capability of automatically generating a power grid fault analysis report. After quickly analyzing the fault recording data, the station controller intuitively displays an analysis result in a form of a report. This helps improve a capability of analyzing and reporting a power grid fault to quickly locate the fault, and helps restore power supply earlier.

In an implementation, the station-level analysis report further includes a fault type, and the fault type indicates that at least one of the single-phase short circuit, the two-phase short circuit, the three-phase short circuit, the high-voltage operation, the phase-loss operation, or the power grid trip occurs in the power grid.

The station controller determines, based on waveforms and features of the fault recording data, that a type of the fault that occurs includes the single-phase short circuit, the two-phase short circuit, the three-phase short circuit, the high-voltage operation, the phase-loss operation, or the power grid trip. The fault type may be obtained through analysis based on a status displayed in the fault recording data and the like. The station-level analysis report may be used to display an analysis result of the recording data in the power station.

According to the solution of this application, the station controller has a capability of automatically generating a power grid fault analysis report. After quickly analyzing the fault recording data, the station controller intuitively displays the analysis result in a form of a report. This helps improve a capability of analyzing and reporting a power grid fault to quickly parse a fault type, and helps restore power supply earlier.

In an implementation, when recording data uploaded by greater than a first preset proportion of the power converters in the subarray in which the subarray data collection unit is located indicates that three phase voltages of the power grid drop asymmetrically, and a positive-sequence voltage of the power grid is less than a per unit value 0.9 and not less than a per unit value 0.5 during the dropping of the three phase voltages, the fault type indicates that the single-phase short circuit occurs in the power grid, and the first preset proportion is greater than or equal to 80% and less than or equal to 100%.

For example, the first preset proportion may be set to 90%.

When more than a first preset proportion of the power converters in the subarray in which the subarray data collection unit is located record that the three phase voltages of the power grid drop asymmetrically, that is, amplitudes or phases of the three phase voltages of the power grid drop unevenly, or some phase voltages in the three phase voltages of the power grid drop, and some phase voltages do not drop but rise, and the positive-sequence voltage of the three phase voltages of the power grid is less than the per unit value 0.9 and not less than the per unit value 0.5 during the asymmetrical dropping of the three phase voltages of the power grid, it is determined that a single-phase short circuit occurs in the power grid.

In an implementation, when recording data uploaded by greater than a first preset proportion of the power converters in the subarray in which the subarray data collection unit is located indicates that three phase voltages of the power grid drop asymmetrically, and a positive-sequence voltage of the power grid is less than a per unit value 0.4 during the dropping of the three phase voltages, the fault type indicates that the two-phase short circuit occurs in the power grid, and the first preset proportion is greater than or equal to 80% and less than or equal to 100%.

When more than a first preset proportion of the power converters in the subarray in which the subarray data collection unit is located record that the three phase voltages of the power grid drop asymmetrically, and the positive-sequence voltage of the three phase voltages of the power grid is less than the per unit value 0.4 during the asymmetrical dropping of the three phase voltages of the power grid, it is determined that a two-phase short circuit fault occurs in the power grid.

In an implementation, when recording data uploaded by greater than a first preset proportion of the power converters in the subarray in which the subarray data collection unit is located indicates that three phase voltages of the power grid drop symmetrically, and a positive-sequence voltage of the power grid is less than a per unit value 0.9 during the dropping of the three phase voltages, the fault type indicates that the three-phase short circuit occurs in the power grid, and the first preset proportion is greater than or equal to 80% and less than or equal to 100%.

When more than a first preset proportion of the power converters in the subarray in which the subarray data collection unit is located record that the three phase voltages of the power grid drop symmetrically, and the positive-sequence voltage of the three phase voltages of the power grid is less than the per unit value 0.9 during the symmetrical dropping of the three phase voltages of the power grid, it is determined that a three-phase short circuit occurs in the power grid.

According to the solution of this application, a specific fault that occurs in the power grid is determined based on different features that are of the three phase voltages of the power grid and that are recorded in the fault recording data. This helps improve a capability of analyzing and reporting a fault of the power grid to quickly parse a fault type, and helps restore power supply earlier.

In an implementation, when the recording data uploaded by the subarray data collection units indicates that greater than a second preset proportion of the subarray data collection units record that at least one of the single-phase short circuit, the two-phase short circuit, the three-phase short circuit, the high-voltage operation, the phase-loss operation, or the power grid trip occurs in the power grid, and none of the subarray data collection units records a power grid trip fault, the location information indicates that the fault occurs outside the power supply system, and the second preset proportion is greater than or equal to 80% and less than or equal to 100%. For example, the second preset proportion may be set to 90%.

When a fault occurs at different locations of the power grid and the power supply system, three phase voltages that are of the power grid and that are recorded by the power converters in the subarray in which the subarray data collection unit is located have different features. A location at which the fault occurs may be determined based on different fault recording data uploaded by different subarrays.

In the recording data that is uploaded by all the subarray data collection units and that is collected by the station controller, more than a second preset proportion of the subarray data collection units record that a single-phase short circuit fault occurs in the power grid, and no subarray data collection unit records that the power grid trips. In this case, the location information indicates that the single-phase short circuit fault occurs outside the power supply system.

In an implementation, when the recording data uploaded by the subarray data collection units indicates that greater than a second preset proportion of the subarray data collection units record that at least one of the single-phase short circuit, the two-phase short circuit, the three-phase short circuit, the high-voltage operation, or the phase-loss operation occurs in the power grid, and less than a third preset proportion of the subarray data collection units record a power grid trip fault after the fault ends, the location information indicates that the fault occurs inside the power supply system, the second preset proportion is greater than or equal to 80% and less than or equal to 100%, and the third preset proportion is greater than or equal to 40% and less than or equal to 60%.

For example, the third preset proportion may be set to 50%.

In the recording data that is uploaded by all the subarray data collection units and that is collected by the station controller, more than a second preset proportion of the subarray data collection units record that at least one of the single-phase short circuit, the two-phase short circuit, the three-phase short circuit, the high-voltage operation, or the phase-loss operation occurs, and after the fault ends, at least one subarray data collection unit records that the power grid trips, and a proportion of the subarray data collection units that record that the power grid trips is less than the third preset proportion. In this case, the location information indicates that the fault occurs inside the power supply system. A specific location is a subarray interconnection line on which the subarray data collection unit that records the trip of the power grid is located.

According to the solution of this application, information about a location at which a fault occurs is determined based on fault features recorded in fault recording data in different subarrays. This helps improve a capability of analyzing and reporting a fault of the power grid to quickly parse a fault type, and helps restore power supply earlier.

According to a second aspect, this application provides a power converter applied to a power supply system. The power supply system includes a station controller and a plurality of subarrays, and each subarray includes a power converter and a subarray data collection unit. The power converter is configured to: convert a direct current from a photovoltaic module or an energy storage apparatus into an alternating current and input the alternating current to a power grid. The power converter includes an output end and a communication interface. The power converter is further configured to upload, through the communication interface, recording data generated when a fault occurs in the power grid to a subarray data collection unit of a subarray in which the power converter is located, and the recording data includes information about a voltage and an output current that are output by the output end of the power converter. The power converter is configured to upload the recording data generated when the fault occurs in the power grid to the subarray data collection unit, so that the subarray data collection unit further uploads the recording data generated when the fault occurs in the power grid to the station controller.

For beneficial effect of another aspect, refer to the beneficial effect described in the first aspect. Details are not described herein again.

### BRIEF DESCRIPTION OF DRAWINGS

FIG. 1 is a diagram of an application scenario according to this application;
FIG. 2 is a diagram of reporting fault recording data level by level according to an embodiment of this application; and
FIG. 3 is a schematic flowchart of fault recording according to an embodiment of this application.

### DESCRIPTION OF EMBODIMENTS

The following describes technical solutions of this application with reference to accompanying drawings. The accompanying drawings and detailed descriptions of the following embodiments are used to illustrate principles of this application, but cannot be used to limit the scope of this application. In other words, this application is not limited to the described embodiments.

A power supply system provided in this application is applicable to a plurality of application fields such as a new energy smart microgrid field, a power transmission and distribution field, a new energy field (for example, a photovoltaic grid-connected field, a thermal power grid-connected field, or a wind power grid-connected field), a photovoltaic power generation field, a wind power generation field, a thermal power generation field, or a high-power converter field (for example, converting a direct current into a high-voltage alternating current with a high power). This may be specifically determined based on an actual application scenario, and is not limited herein. The power supply system provided in this application is applicable to a photovoltaic power supply system and a wind power supply system. This is not limited herein. The power supply system provided in this application may be adapted to different application scenarios, for example, an application scenario in which power is supplied to a load in a photovoltaic energy storage power supply environment, an application scenario in which power is supplied to a load in a wind energy storage power supply environment, an application scenario in which power is supplied to a load in a pure energy storage power supply environment, or another application scenario.

Currently, a new-energy energy storage station generally includes a plurality of power electronic devices that step up and converge step by step. When a fault occurs in a power grid, it is expected to record an output voltage and an output current of each power electronic device, to provide analysis input for further analyzing the fault of the power grid. Fault recording is a key technology in a power system, and is mainly used to monitor, record, and analyze a fault event in the power grid in real time. Voltage and current waveforms and related data when the power grid is abnormal are captured, to help operation and maintenance quickly locate a fault, analyze a fault cause, and take corresponding maintenance measures. The fault recording is widely used in the electric power industry. It can greatly improve operation reliability of the power grid and is one of guarantees for safe and stable operation of the power system.

When a fault occurs in a power grid, each power converter performs fault recording, generates a fault recording file, and then stores the fault recording file in the device. Operation and maintenance personnel need to go to sites in which devices are located, separately obtain fault recording files one by one by using a digital collection device, and summarize all fault recording data after logs are exported during inspection. Then, professional technical personnel manually analyze the data to locate a fault point and a cause. In this way, maintenance personnel can repair the fault point to rectify the fault. Because a coverage area of the power supply system and the power grid is increasingly large and a quantity of devices increases, it takes a large amount of time to collect the fault recording data of the devices for fault analysis and fault rectifying. As a result, it takes a long time to restore power supply, and a large amount of manpower and material resources are wasted.

In view of the foregoing problems, embodiments of this application provide a power supply system. A power converter detects a fault, records recording data, and uploads the recording data in real time. The fault recording data is reported level by level, to implement overall fault recording analysis at a power station level. This shortens time for exporting a log through manual inspection and professional technical personnel to analyze a power grid event, facilitates quick locating of a cause of the power grid event, and improves a capability and efficiency of analyzing and reporting a power grid fault.

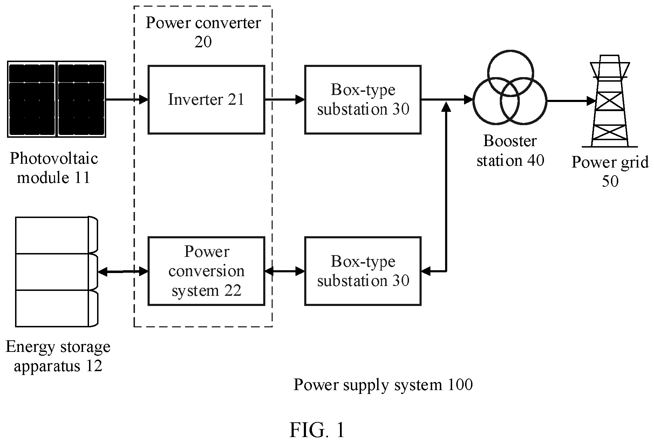

FIG. 1 is a diagram of an application scenario according to an embodiment of this application. This application may be applied to a power supply system shown in FIG. 1.

A power supply system 100 includes a station controller 41 and a plurality of subarrays. Each subarray includes a plurality of power converters 20 and one subarray data collection unit 31. A photovoltaic module 11 and an energy storage apparatus 12 are configured to connect to a power grid 50 via the power converter 20. The power converter 20 is configured to: convert a direct current from the photovoltaic module 11 or the energy storage apparatus 12 into an alternating current and input the alternating current to the power grid 50. The power converter 20 includes an output end and a communication interface connected to the subarray data collection unit 31.

In an application scenario, the power supply system 100 is a photovoltaic power supply system, and the power converter 20 is a photovoltaic inverter 21. The photovoltaic inverter 21 is connected to the photovoltaic module 11. The photovoltaic inverter 21 is configured to: convert a direct current transmitted by the photovoltaic module 11 into an alternating current, and transmit the alternating current to a box-type substation 30. After the box-type substation 30 boosts the alternating current, the boosted alternating current is boosted by a booster station 40 again and then transmitted to the power grid 50.

In another application scenario, the power supply system 100 is an energy storage power supply system, and the power converter 20 is a power conversion system 22 (PCS). The power conversion system 22 is connected to the energy storage apparatus 12, and is configured to: convert a direct current transmitted by the energy storage apparatus 12 into an alternating current, and transmit the alternating current to a box-type substation 30. After the box-type substation 30 boosts the alternating current, the boosted alternating current is transmitted to the power grid 50 through a booster station 40. The box-type substation 30 connected to the power conversion system 22 may further step down an alternating current from the power grid, and transmit the step-down alternating current to the power conversion system 22. After converting the alternating current into a direct current, the power conversion system 22 transmits the direct current to the energy storage apparatus 12 for storage. The energy storage apparatus 12 may be a large-capacity and high-power battery, or may be an energy storage container, or may be an apparatus used for energy storage in another form. The energy storage apparatus 12 may be a secondary battery.

In another application scenario, the power supply system 100 is a photovoltaic energy storage system, and the power converter 20 includes a photovoltaic inverter 21 and a power conversion system 22. The photovoltaic energy storage system includes the photovoltaic module 11, the photovoltaic inverter 21, the power conversion system 22, the energy storage apparatus 12, a box-type substation 30, and a booster station 40. The photovoltaic energy storage system further includes the power grid 50 and a load (not shown in the figure). The photovoltaic inverter 21 can convert a direct current from the photovoltaic module 11 into an alternating current, and transmit the alternating current to the alternating current power grid 50 or the load. Alternatively, the photovoltaic inverter 21 can transmit a direct current from the photovoltaic module 11 to the energy storage apparatus 12, to charge the energy storage apparatus 12. The energy storage apparatus 12 in the photovoltaic energy storage system can store and release electric energy. The energy storage apparatus 12 stores direct current electric energy from the photovoltaic module 11, and the energy storage apparatus 12 also supplies power to the power grid 50 or the load via the photovoltaic inverter 21. The photovoltaic inverter 21 includes two direct current ports and an alternating current output end, and the two direct current ports are respectively configured to connect to the photovoltaic module 11 and the energy storage apparatus 12. The alternating current output end may be configured to output an alternating current, and the output alternating current completes power distribution by using a power distribution box. The photovoltaic module 11 feeds power to the power grid 50 and supplies power to the load through a direct current port. The energy storage apparatus 12 supplies power to the load through a direct current port.

In a specific implementation process, the power supply system 100 includes a plurality of energy storage subarrays or a plurality of photovoltaic subarrays, each energy storage subarray includes at least one energy storage apparatus 12, and the at least one energy storage apparatus 12 is connected to a direct current input end of one power conversion system 22. Each photovoltaic subarray includes at least one photovoltaic module 11, and the at least one photovoltaic module 11 is connected to a direct current input end of one photovoltaic inverter 21.

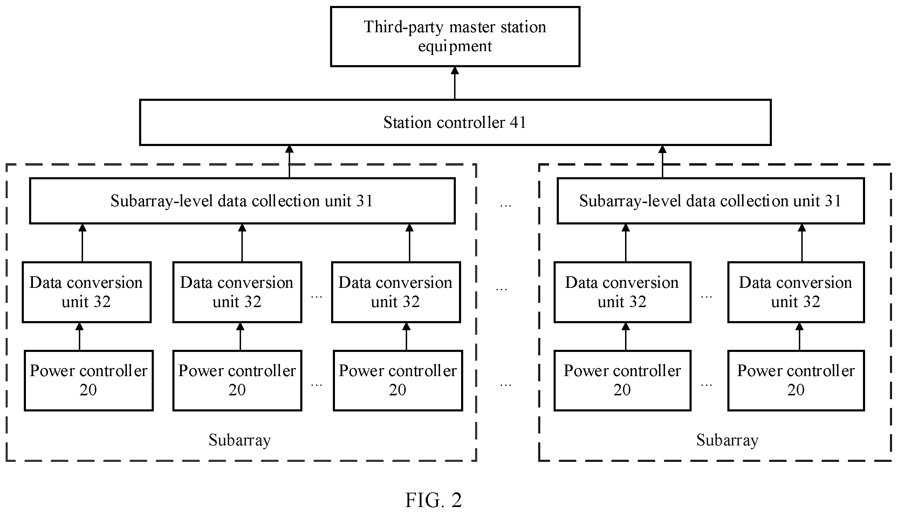

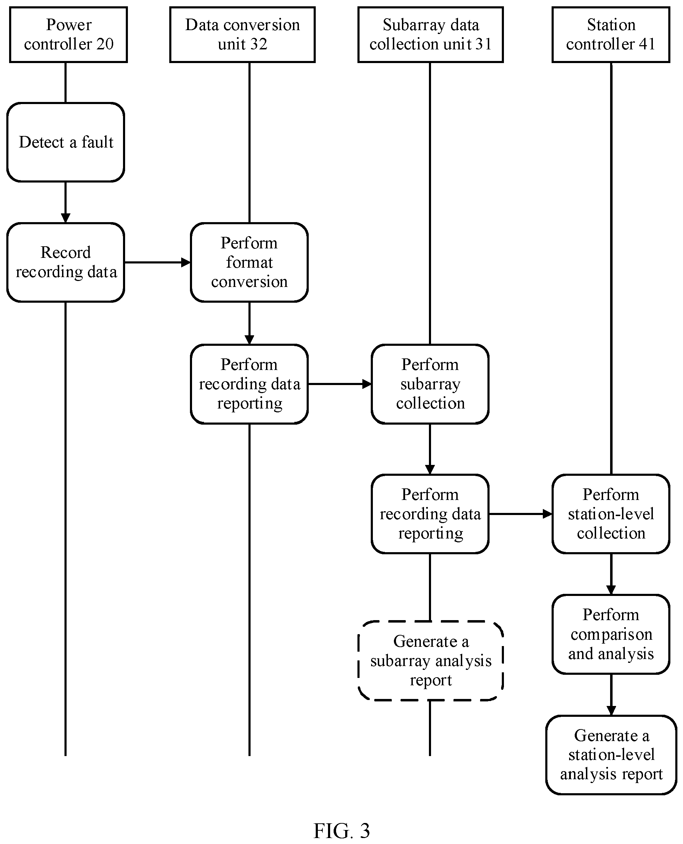

FIG. 2 and FIG. 3 are diagrams of reporting recording data level by level according to an embodiment of this application.

As shown in FIG. 2 and FIG. 3, the power converter 20 is further configured to upload, through the communication interface, recording data generated when a fault occurs in the power grid 50 to a subarray data collection unit 31 of a subarray in which the power converter is located, and the recording data includes information about a voltage and an output current that are output by the output end of the power converter 20.

The power converter 20 converts a direct current transmitted by a power supply unit 10 into an alternating current, and transmits the alternating current to the power grid 50. Because power converters 20 in the entire power supply system 100 are connected in parallel, when a fault occurs in the power grid 50, the output voltage or the output current of the power converter 20 changes. The power converter 20 has a fault detection function and a fault recording function. When the power converter 20 detects that a fault occurs in the power grid 50, or low voltage ride-through (low voltage ride through, LVRT), high voltage ride-through (high voltage ride through, HVRT), or the like occurs in the power supply system, the power converter 20 automatically enters a recording state, to record recording data.

The fault recording function is triggered by a fault in the power supply system 100 or the power grid 50. The power converter 20 collects various analog signals and switch signals in a power system. The recording data includes but is not limited to an output voltage, an output current, output power, or the like. The recording data also includes analog quantities such as alternating current-side three phase grid voltages, three phase currents, and a direct current-side bus voltage, and information like fault occurrence time, fault code, high voltage ride-through, and low voltage ride-through. The power converter 20 may not store the recorded recording data, and upload the recording data in a timely manner without occupying local storage space of the power converter 20, so that chip resource occupation of the power converter 20 is reduced.

Still refer to FIG. 2 and FIG. 3. The subarray data collection unit 31 is configured to: collect and upload the recording data that is generated when the fault occurs in the power grid 50 and that is uploaded by a plurality of power converters 20 in a subarray in which the subarray data collection unit 31 is located.

Alternating current output ends of a plurality of power converters 20 in a same subarray in the power supply system 100 are connected to a same box-type substation 30. The subarray data collection unit 31 may be located in the box-type substation 30, and is connected to the power converter 20 to implement communication. The plurality of power converters 20 upload recording data to the subarray data collection unit 31 in real time. After collecting the recording data uploaded by the plurality of power converters 20 in the subarray, the subarray data collection unit 31 uploads the recording data to a station controller 41.

In an embodiment, a communication port of the power converter 20 is connected to the subarray data collection unit 31 through power line carrier (power line carrier, PLC) communication or an optical fiber.

The power converter 20 and the subarray data collection unit 31 communicate with each other through the power line carrier communication or the optical fiber. This improves a transmission speed of fault recording data, and helps improve a capability and efficiency of analyzing and reporting a power grid fault.

In an embodiment, the recording data further includes a first moment at which the power converter 20 starts recording and a second moment at which the power converter 20 ends recording when the fault occurs in the power grid 50. When first moments or second moments included in the recording data uploaded by the plurality of power converters 20 in the subarray are different, the subarray data collection unit 31 is configured to unify the first moments and the second moments, to enable the first moments included in the recording data that is of the plurality of power converters 20 and that is uploaded by the subarray data collection unit 31 to the station controller 41 to be the same and the second moments included in the recording data that is of the plurality of power converters 20 and that is uploaded by the subarray data collection unit 31 to the station controller 41 to be the same.

The plurality of power converters 20 record the recording data based on respective system time. The information about the output voltage and the output current in the recording data have corresponding moment information. The recording data further includes the first moment at which the power converter 20 starts recording and the second moment at which the power converter 20 ends recording. After collecting the recording data of the plurality of power converters 20 in the subarray, the subarray data collection unit 31 needs to perform a time synchronization operation. The recording data time synchronization operation is to ensure consistent time of event data recorded by the plurality of power converters 20. When the plurality of power converters 20 simultaneously record event fault data, ensuring time consistency of the data helps better perform data comparison and analysis, and improves data consistency and comparability.

In an embodiment, the subarray data collection unit 31 is further configured to generate a subarray analysis report, the subarray analysis report represents the recording data uploaded by the plurality of power converters 20 in the subarray in which the subarray data collection unit 31 is located, the subarray analysis report includes a fault type, and the fault type indicates that at least one of a single-phase short circuit, a two-phase short circuit, a three-phase short circuit, a high-voltage operation, a phase-loss operation, or a power grid trip occurs in the power grid 50.

After collecting the recording data uploaded by the plurality of power converters 20, the subarray data collection unit 31 automatically generates the subarray analysis report based on the recording data of the plurality of power converters 20 in the subarray. The subarray data collection unit 31 determines, based on waveforms and features of fault recording data recorded by different power converters 20 and by using a preset algorithm or model, a type of the fault that occurs in the power grid. The subarray analysis report is used to display an analysis result of the recording data in the subarray.

According to the solution of this application, the subarray data collection unit 31 has a capability of automatically generating a power grid fault analysis report. After quickly analyzing the fault recording data, the subarray data collection unit 31 intuitively displays the analysis result in a form of a report. This helps improve a capability of analyzing and reporting a power grid fault to quickly locate the fault and parse a fault type, and helps restore power supply earlier.

In an embodiment, when recording data uploaded by greater than a first preset proportion of the power converters 20 in the subarray in which the subarray data collection unit 31 is located indicates that three phase voltages of the power grid 50 drop asymmetrically, and a positive-sequence voltage of the power grid is less than a per unit value 0.9 and not less than a per unit value 0.5 during the dropping of the three phase voltages, the fault type indicates that the single-phase short circuit occurs in the power grid 50, and the first preset proportion is greater than or equal to 80% and less than or equal to 100%.

When the recording data uploaded by greater than the first preset proportion of the power converters 20 in the subarray in which the subarray data collection unit 31 is located all indicates that the three phase voltages of the power grid drop asymmetrically, and the positive-sequence voltage of the power grid is less than a low-voltage fault determining threshold and not less than a single-phase drop determining threshold during the dropping of the three phase voltages of the power grid, the fault type indicates that the single-phase short circuit occurs in the power grid. The low-voltage fault determining threshold may be the per unit value 0.9, and the single-phase drop determining threshold may be the per unit value 0.5.

For example, more than 90% of the power converters 20 in the subarray in which the subarray data collection unit 31 is located record that the three phase voltages of the power grid drop asymmetrically, and the positive-sequence voltage of the power grid 50 is less than the per unit value 0.9 and not less than the per unit value 0.5 during the asymmetrical dropping of the three phase voltages of the power grid 50. In this case, the fault type indicates that a single-phase short circuit fault occurs in the power grid 50.

In an embodiment, when recording data uploaded by greater than a first preset proportion of the power converters 20 in the subarray in which the subarray data collection unit 31 is located indicates that three phase voltages of the power grid 50 drop asymmetrically, and a positive-sequence voltage of the power grid 50 is less than a per unit value 0.4 during the dropping of the three phase voltages, the fault type indicates that the two-phase short circuit occurs in the power grid 50, and the first preset proportion is greater than or equal to 80% and less than or equal to 100%.

When the recording data uploaded by greater than the first preset proportion of the power converters 20 in the subarray in which the subarray data collection unit 31 is located all indicates that the three phase voltages drop asymmetrically, and the positive-sequence voltage is less than a two-phase drop determining threshold during the dropping of the three phase voltages, the fault type indicates that the two-phase short circuit occurs in the power grid. The two-phase drop determining threshold may be the per unit value 0.4.

For example, more than 90% of the power converters 20 in the subarray in which the subarray data collection unit 31 is located record that the three phase voltages of the power grid drop asymmetrically, and the positive-sequence voltage of the power grid is less than the per unit value 0.4 during the asymmetrical dropping of the three phase voltages of the power grid. In this case, the fault type indicates that a two-phase short circuit fault occurs in the power grid.

In an embodiment, when recording data uploaded by greater than a first preset proportion of the power converters 20 in the subarray in which the subarray data collection unit 31 is located indicates that three phase voltages of the power grid 50 drop symmetrically, and a positive-sequence voltage of the power grid 50 is less than a per unit value 0.9 during the dropping of the three phase voltages, the fault type indicates that the three-phase short circuit occurs in the power grid 50, and the first preset proportion is greater than or equal to 80% and less than or equal to 100%.

When the recording data uploaded by greater than the first preset proportion of the power converters 20 in the subarray in which the subarray data collection unit 31 is located all indicates that the three phase voltages drop symmetrically, and the positive-sequence voltage is less than a low-voltage fault determining threshold during the dropping of the three phase voltages, the fault type indicates that the three-phase short circuit occurs in the power grid. The low-voltage fault determining threshold may be the per unit value 0.9.

For example, more than 90% of the power converters 20 in the subarray in which the subarray data collection unit 31 is located record that the three phase voltages of the power grid drop symmetrically, and the positive-sequence voltage of the power grid is less than the per unit value 0.9 during the symmetrical dropping of the three phase voltages of the power grid. In this case, the fault type indicates that a three-phase short circuit fault occurs in the power grid.

In an embodiment, when recording data uploaded by greater than a first preset proportion of the power converters 20 in the subarray in which the subarray data collection unit 31 is located indicates that three phase voltages of the power grid 50 rise symmetrically, and a positive-sequence voltage of the power grid 50 is greater than a per unit value 1.1 during the symmetrical rising of the three phase voltages of the power grid 50, the fault type indicates that the high-voltage operation occurs in the power grid 50, and the first preset proportion is greater than or equal to 80% and less than or equal to 100%.

When the recording data uploaded by greater than the first preset proportion of the power converters 20 in the subarray in which the subarray data collection unit 31 is located all indicates that the three phase voltages of the power grid rise symmetrically, and the positive-sequence voltage is greater than a high-voltage fault determining threshold during the rising of the three phase voltages of the power grid, the fault type indicates that the high-voltage operation occurs in the power grid. The high-voltage fault determining threshold may be the per unit value 1.1.

For example, more than 90% of the power converters 20 in the subarray in which the subarray data collection unit 31 is located record that the three phase voltages of the power grid 50 rise symmetrically, and a positive-sequence voltage is greater than the per unit value 1.1 during the symmetrical rising of the three phase voltages of the power grid 50. In this case, the fault type indicates that a high-voltage operation fault occurs in the power grid 50.

In an embodiment, when recording data uploaded by greater than a first preset proportion of the power converters 20 in the subarray in which the subarray data collection unit 31 is located indicates that three phase voltages of the power grid 50 change asymmetrically, and a positive-sequence voltage of the power grid 50 is less than a per unit value 1.1 during the asymmetrical changing of the three phase voltages of the power grid 50, the fault type indicates that the phase-loss operation occurs in the power grid 50, and the first preset proportion is greater than or equal to 80% and less than or equal to 100%.

The asymmetrical change of the three phase voltages of the power grid 50 means that two phase voltages in the three phase voltages rise, and the other phase voltage drops; or two phase voltages drop, and the other phase voltage rises.

When the recording data uploaded by greater than the first preset proportion of the power converters 20 in the subarray in which the subarray data collection unit 31 is located all indicates that the three phase voltages of the power grid change asymmetrically, and the positive-sequence voltage is less than a high-voltage fault determining threshold during the asymmetrical changing of the three phase voltages, the fault type indicates that the phase-loss operation occurs in the power grid. The high-voltage fault determining threshold may be the per unit value 1.1.

For example, more than 90% of the power converters 20 in the subarray in which the subarray data collection unit 31 is located record that the three phase voltages in the three phase voltages of the power grid change asymmetrically, and a positive-sequence low voltage is less than the per unit value 1.1 during the asymmetrical changing of the three phase voltages. In this case, the fault type indicates that a phase-loss operation fault occurs in the power grid.

In an embodiment, when recording data uploaded by greater than a first preset proportion of the power converters 20 in the subarray in which the subarray data collection unit 31 is located indicates that three phase voltages of the power grid 50 are less than a per unit value 0.05, and duration exceeds 30 seconds, the fault type indicates that the power grid trip occurs in the power grid 50, and the first preset proportion is greater than or equal to 80% and less than or equal to 100%.

When the recording data uploaded by greater than the first preset proportion of the power converters 20 in the subarray in which the subarray data collection unit 31 is located all indicates that the three phase voltages of the power grid are less than a power grid trip threshold, and duration exceeds a duration threshold, the fault type indicates that the power grid trip occurs in the power grid. The power grid trip threshold may be the per unit value 0.05. The duration threshold may be 30 seconds.

For example, more than 90% of the power converters 20 in the subarray in which the subarray data collection unit 31 is located record that the three phase voltages of the power grid are less than the per unit value 0.05, and the duration exceeds 30s. In this case, the fault type indicates that a power grid trip fault occurs in the power grid.

Still refer to FIG. 2 and FIG. 3. The station controller 41 is configured to: collect and store the recording data that is generated when the fault occurs in the power grid 50 and that is uploaded by a plurality of subarray data collection units 31.

The station controller 41 comprehensively controls and manages the power converters 20 in all the subarrays in the power supply system 100. When the fault occurs in the power grid 50, the station controller 41 collects and stores the recording data uploaded by the plurality of subarray data collection units 31. The station controller 41 obtains recording data recorded by all power converters 20 in the power supply system 100, to store a station-level fault recording file, so as to directly view and analyze the recording data.

In the conventional technology, the power converter 20 records an internal output voltage and an internal output current. It is difficult to compare fault responses of different devices based on fault recording data recorded by a single power converter 20 because the power converters 20 are disposed in a distributed manner. Therefore, in this application, the power converter 20 reports fault recording data level by level, the station controller 41 aggregates all fault recording data, and overall fault recording storage and analysis at a power station level are implemented by fully utilizing an architecture of a string power supply system 100 without additionally adding a recording device; and at the station controller 41, an output voltage and an output current inside each power converter 20 are obtained, and fault responses of different devices are compared.

Currently, operation and maintenance personnel read fault recording files from fault recording devices of power converters 20 one by one by using a digital collection device, summarize all recording files for analysis, and accurately locate a fault point based on fault recording data, to rectify a power grid fault, so as to restore system running as soon as possible. However, as the power supply system 100 and the power grid 50 increase in scale, a probability of causing an accident by a local power grid fault and a probability of impact scope expansion are greatly increased accordingly. In addition, an increasing quantity of devices in the power supply system 100 greatly increases an amount of information generated when a fault occurs in the power grid 50. This objectively increases time required for the operation and maintenance personnel to collect fault recording data, rectify the fault, and restore power supply. Therefore, the station controller 41 can obtain fault recording data of all the power converters 20, so that time for exporting a log through manual inspection and professional technical personnel to analyze a power grid event is effectively shortened. In addition, all the fault recording data is stored in a unified manner, so that local storage space of the power converter 20 is saved, and manpower and material resources are saved. This facilitates quick locating of a cause of the power grid event, and improves efficiency of fault recording analysis.

In an embodiment, the station controller 41 is further configured to generate a station-level analysis report, the station-level analysis report represents the recording data uploaded by the plurality of subarray data collection units 31, the station-level analysis report includes location information, and the location information indicates whether the fault occurs inside or outside the power supply system 100.

In an embodiment, the station-level analysis report further includes a fault type, and the fault type indicates that at least one of the single-phase short circuit, the two-phase short circuit, the three-phase short circuit, the high-voltage operation, the phase-loss operation, or the power grid trip occurs in the power grid 50.

After collecting the recording data uploaded by the plurality of subarray data collection units 31, the station controller 41 automatically generates a station-level analysis report based on the fault recording data. The station controller 41 determines, based on a difference between fault recording data recorded by different subarrays and by using a preset algorithm or model, a location at which a fault occurs, and determines, based on waveforms and features of the fault recording data, a type of the fault that occurs. The station-level analysis report is used to display an analysis result of the recording data in the power station.

According to the solution of this application, the station controller 41 has a capability of automatically generating a power grid fault analysis report. After quickly analyzing the fault recording data, the station controller 41 intuitively displays the analysis result in a form of a report. This helps improve a capability of analyzing and reporting a power grid fault to quickly locate the fault and parse a fault type, and helps restore power supply earlier.

In an embodiment, when the recording data uploaded by the subarray data collection units 31 indicates that greater than a second preset proportion of the subarray data collection units 31 record that at least one of the single-phase short circuit, the two-phase short circuit, the three-phase short circuit, the high-voltage operation, the phase-loss operation, or the power grid trip occurs in the power grid, and none of the subarray data collection units 31 records a power grid trip fault, the location information indicates that the fault occurs outside the power supply system 100, and the second preset proportion is greater than or equal to 80% and less than or equal to 100%.

In an embodiment, when the recording data uploaded by the subarray data collection units 31 indicates that greater than a second preset proportion of the subarray data collection units 31 record that at least one of the single-phase short circuit, the two-phase short circuit, the three-phase short circuit, the high-voltage operation, or the phase-loss operation occurs in the power grid 50, and less than a third preset proportion of the subarray data collection units 31 record a power grid 50 trip fault after the fault ends, the location information indicates that the fault occurs inside the power supply system 100, the second preset proportion is greater than or equal to 80% and less than or equal to 100%, and the third preset proportion is greater than or equal to 40% and less than or equal to 60%.

When a fault occurs at different locations of the power grid 50, three phase voltages recorded by the power converter 20 in the subarray in which the subarray data collection unit 31 is located have different features. A location at which the fault occurs may be located based on different fault recording data uploaded by different subarrays.

For example, the second preset proportion is set to 90%, and the third preset proportion is set to 50%.

In an embodiment, in the recording data that is uploaded by all the subarray data collection units 31 and that is collected by the station controller 41, more than 90% of the subarray data collection units 31 record that a single-phase short circuit fault occurs in the power grid 50, and no subarray data collection unit 31 records that the power grid 50 trips. In this case, the location information indicates that the single-phase short circuit fault occurs outside the power supply system 100.

In an embodiment, in the recording data that is uploaded by all the subarray data collection units 31 and that is collected by the station controller 41, more than 90% of the subarray data collection units 31 record that a single-phase short circuit fault occurs in the power grid 50, and after the single-phase short circuit fault ends, less than 50% of the subarray data collection units 31 record that the power grid 50 trips. In this case, the location information indicates that the single-phase short circuit fault occurs inside the power supply system 100. A specific location is a subarray interconnection line on which the subarray data collection unit 31 that records the trip of the power grid 50 is located.

In an embodiment, in the recording data that is uploaded by all the subarray data collection units 31 and that is collected by the station controller 41, more than 90% of the subarray data collection units 31 record that a two-phase short circuit fault occurs in the power grid 50, and no subarray data collection unit 31 records that the power grid 50 trips. In this case, the location information indicates that the two-phase short circuit fault occurs outside the power supply system 100.

In an embodiment, in the recording data that is uploaded by all the subarray data collection units 31 and that is collected by the station controller 41, more than 90% of the subarray data collection units 31 record that a two-phase short circuit fault occurs in the power grid 50, and after the two-phase short circuit fault ends, less than 50% of the subarray data collection units 31 record that the power grid 50 trips. In this case, the location information indicates that the two-phase short circuit fault occurs inside the power supply system 100. A specific location is a subarray interconnection line on which the subarray data collection unit 31 that records the trip of the power grid 50 is located.

In an embodiment, in the recording data that is uploaded by all the subarray data collection units 31 and that is collected by the station controller 41, more than 90% of the subarray data collection units 31 record that a three-phase short circuit fault occurs in the power grid 50, and no subarray data collection unit 31 records that the power grid 50 trips. In this case, the location information indicates that the three-phase short circuit fault occurs outside the power supply system 100.

In an embodiment, in the recording data that is uploaded by all the subarray data collection units 31 and that is collected by the station controller 41, more than 90% of the subarray data collection units 31 record that a three-phase short circuit fault occurs in the power grid 50, and after the three-phase short circuit fault ends, less than 50% of the subarray data collection units 31 record that the power grid 50 trips. In this case, the location information indicates that the three-phase short circuit fault occurs inside the power supply system 100. A specific location is a subarray interconnection line on which the subarray data collection unit 31 that records the trip of the power grid 50 is located.

In an embodiment, in the recording data that is uploaded by all the subarray data collection units 31 and that is collected by the station controller 41, more than 90% of the subarray data collection units 31 record that the high-voltage operation occurs in the power grid 50, and no subarray data collection unit 31 records that the power grid 50 trips. In this case, the location information indicates that the high-voltage operation fault occurs outside the power supply system 100.

In an embodiment, in the recording data that is uploaded by all the subarray data collection units 31 and that is collected by the station controller 41, more than 90% of the subarray data collection units 31 record that the high-voltage operation occurs in the power grid 50, and after the high-voltage operation fault ends, less than 50% of the subarray data collection units 31 record that the power grid 50 trips. In this case, the location information indicates that the high-voltage operation fault occurs inside the power supply system 100. A specific location is a subarray interconnection line on which the subarray data collection unit 31 that records the trip of the power grid 50 is located.

In an embodiment, in the recording data that is uploaded by all the subarray data collection units 31 and that is collected by the station controller 41, more than 90% of the subarray data collection units 31 record that the phase-loss operation occurs in the power grid 50, and no subarray data collection unit 31 records that the power grid 50 trips. In this case, the location information indicates that the phase-loss operation fault occurs outside the power supply system 100.

In an embodiment, in the recording data that is uploaded by all the subarray data collection units 31 and that is collected by the station controller 41, more than 90% of the subarray data collection units 31 record that the phase-loss operation occurs in the power grid 50, and after the phase-loss operation fault ends, at least one and less than 50% of the subarray data collection units 31 record that the power grid 50 trips. In this case, the location information indicates that the phase-loss operation fault occurs inside the power supply system 100. A specific location is a subarray interconnection line on which the subarray data collection unit 31 that records the trip of the power grid 50 is located.

In an embodiment, in the recording data that is uploaded by all the subarray data collection units 31 and that is collected by the station controller 41, more than 90% of the subarray data collection units 31 record that the power grid 50 trips. In this case, the location information indicates that the trip fault of the power grid 50 occurs outside the power supply system 100.

According to the solution of this application, information about a location at which a fault occurs is determined based on fault features recorded in fault recording data in different subarrays. This helps improve a capability of analyzing and reporting a fault of the power grid 50 to quickly parse a fault type, and helps restore power supply earlier.

Still refer to FIG. 2 and FIG. 3. In an embodiment, the power supply system 100 further includes a data conversion unit 32. The data conversion unit 32 is configured to convert recording data in an original format into a target format. The original format includes a text format, and the target format includes COMTRADE.

When the power converter 20 records fault recording data, the recording data is recorded in an original format, to generate a string of data in a text format, for example, recorded in an Excel format. However, the data in the original format is not conducive to data analysis. Therefore, the data conversion unit 32 is disposed to convert the data in the original format, so that a fault recording file meets a general analysis format in the industry, for example, a COMTRADE format. COMTRADE is a common format for transient data exchange in power systems of the institute of electrical and electronics engineers (institute of electrical and electronics engineers, IEEE) standard, and has been widely used in dynamic data recording and fault recording of the power systems. As a standard format, COMTRADE defines a file format for containing transient waveforms and event data obtained from a power system or a power system model. Relevant file data recorded in a COMTRADE file is analyzed, to analyze and determine a cause and type of a fault occurring in the power system, and provide a basis of data in a common format for accident analysis.

It should be understood that the data conversion unit 32 is disposed in each power converter 20, or disposed in the subarray data collection unit 31, or disposed in the station controller 41.

Preferably, the data conversion unit 32 is disposed in the subarray data collection unit 31 of the box-type substation 30.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply system, wherein the power supply system comprises a station controller and a plurality of subarrays, and each subarray comprises a plurality of power converters and one subarray data collection unit;
the power converter is configured to: convert a direct current from a photovoltaic module or an energy storage apparatus into an alternating current and input the alternating current to a power grid, the power converter comprises an output end and a communication interface, the power converter is further configured to upload, through the communication interface, recording data generated when a fault occurs in the power grid to a subarray data collection unit of a subarray in which the power converter is located, and the recording data comprises information about a voltage and an output current that are output by the output end of the power converter;
the subarray data collection unit is configured to: collect and upload the recording data that is generated when the fault occurs in the power grid and that is uploaded by a plurality of power converters in a subarray in which the subarray data collection unit is located; and
the station controller is configured to: collect and store the recording data that is generated when the fault occurs in the power grid and that is uploaded by a plurality of subarray data collection units.

2. The power supply system according to claim 1, wherein the recording data further comprises a first moment at which the power converter starts recording and a second moment at which the power converter ends recording when the fault occurs in the power grid; and
when the first moments or the second moments comprised in the recording data uploaded by the plurality of power converters in the subarray are different, the subarray data collection unit is configured to unify the first moments and the second moments, to enable the first moments comprised in the recording data that is of the plurality of power converters and that is uploaded by the subarray data collection unit to the station controller to be the same and the second moments comprised in the recording data that is of the plurality of power converters and that is uploaded by the subarray data collection unit to the station controller to be the same.

3. The power supply system according to claim 1 or 2, wherein the subarray data collection unit is further configured to generate a subarray analysis report, the subarray analysis report represents the recording data uploaded by the plurality of power converters in the subarray in which the subarray data collection unit is located, the subarray analysis report comprises a fault type, and the fault type indicates that at least one of a single-phase short circuit, a two-phase short circuit, a three-phase short circuit, a high-voltage operation, a phase-loss operation, or a power grid trip occurs in the power grid.

4. The power supply system according to any one of claims 1 to 3, wherein the station controller is further configured to generate a station-level analysis report, the station-level analysis report represents the recording data uploaded by the plurality of subarray data collection units, the station-level analysis report comprises location information, and the location information indicates whether the fault occurs inside or outside the power supply system.

5. The power supply system according to claim 4, wherein the station-level analysis report further comprises a fault type, and the fault type indicates that at least one of the single-phase short circuit, the two-phase short circuit, the three-phase short circuit, the high-voltage operation, the phase-loss operation, or the power grid trip occurs in the power grid.

6. The power supply system according to any one of claims 3 to 5, wherein when recording data uploaded by greater than a first preset proportion of the power converters in the subarray in which the subarray data collection unit is located indicates that three phase voltages of the power grid drop asymmetrically, and a positive-sequence voltage of the power grid is less than a per unit value 0.9 and not less than a per unit value 0.5 during the dropping of the three phase voltages, the fault type indicates that the single-phase short circuit occurs in the power grid, and the first preset proportion is greater than or equal to 80% and less than or equal to 100%.

7. The power supply system according to any one of claims 3 to 5, wherein when recording data uploaded by greater than a first preset proportion of the power converters in the subarray in which the subarray data collection unit is located indicates that three phase voltages of the power grid drop asymmetrically, and a positive-sequence voltage of the power grid is less than a per unit value 0.4 during the dropping of the three phase voltages, the fault type indicates that the two-phase short circuit occurs in the power grid, and the first preset proportion is greater than or equal to 80% and less than or equal to 100%.

8. The power supply system according to any one of claims 3 to 5, wherein when recording data uploaded by greater than a first preset proportion of the power converters in the subarray in which the subarray data collection unit is located indicates that three phase voltages of the power grid drop symmetrically, and a positive-sequence voltage of the power grid is less than a per unit value 0.9 during the dropping of the three phase voltages, the fault type indicates that the three-phase short circuit occurs in the power grid, and the first preset proportion is greater than or equal to 80% and less than or equal to 100%.

9. The power supply system according to any one of claims 4 to 8, wherein when the recording data uploaded by the subarray data collection units indicates that greater than a second preset proportion of the subarray data collection units record that at least one of the single-phase short circuit, the two-phase short circuit, the three-phase short circuit, the high-voltage operation, the phase-loss operation, or the power grid trip occurs in the power grid, and none of the subarray data collection units records a power grid trip fault, the location information indicates that the fault occurs outside the power supply system, and the second preset proportion is greater than or equal to 80% and less than or equal to 100%.

10. The power supply system according to any one of claims 4 to 8, wherein when the recording data uploaded by the subarray data collection units indicates that greater than a second preset proportion of the subarray data collection units record that at least one of the single-phase short circuit, the two-phase short circuit, the three-phase short circuit, the high-voltage operation, or the phase-loss operation occurs in the power grid, and less than a third preset proportion of the subarray data collection units record a power grid trip fault after the fault ends, the location information indicates that the fault occurs inside the power supply system, the second preset proportion is greater than or equal to 80% and less than or equal to 100%, and the third preset proportion is greater than or equal to 40% and less than or equal to 60%.

11. A power converter applied to a power supply system, wherein the power supply system comprises a station controller and a plurality of subarrays, and each subarray comprises a power converter and a subarray data collection unit;
the power converter is configured to: convert a direct current from a photovoltaic module or an energy storage apparatus into an alternating current and input the alternating current to a power grid, the power converter comprises an output end and a communication interface, the power converter is further configured to upload, through the communication interface, recording data generated when a fault occurs in the power grid to a subarray data collection unit of a subarray in which the power converter is located, and the recording data comprises information about a voltage and an output current that are output by the output end of the power converter; and
the power converter is configured to upload the recording data generated when the fault occurs in the power grid to the subarray data collection unit, so that the subarray data collection unit further uploads the recording data generated when the fault occurs in the power grid to the station controller.
